# EUROPÄISCHE PATENTSCHRIFT

(11) **EP 2 014 957 B1**
(45) Veröffentlichungstag und Bekanntmachung des Hinweises auf die Patenterteilung: **21.01.2015**
(21) Anmeldenummer: 08008970.9
(22) Anmeldetag: 15.05.2008
(51) Int. Cl.: F16H 61/26, F16H 61/24

(54) **Betätigungsvorrichtung für ein Schaltgetriebe eines Kraftfahrzeuges**
Actuation device for the gearbox in a motor vehicle
Dispositif d'actionnement d'une boîte de vitesse de véhicule automobile

(30) Priorität: 13.07.2007 DE 102007032681
(43) Veröffentlichungstag der Anmeldung: 14.01.2009
(73) Patentinhaber: GM Global Technology Operations LLC, Detroit, MI 48265-3000 (US)
(72) Erfinder: Sacharetzki, Damian, 67574 Osthofen (DE); Heldmann, Olaf, 64572 Büttelborn (DE); Scheffel, Volker, 65474 Bischofsheim (DE)
(74) Vertreter: Strauss, Peter

(56) Entgegenhaltungen:
- EP-A- 0 674 124
- DE-A1- 10 210 972
- DE-A1- 19 901 813
- DE-A1- 19 905 305
- FR-A- 2 865 689

## Beschreibung

Die Erfindung betrifft eine Betätigungsvorrichtung für ein Schaltgetriebe eines Kraftfahrzeuges.

Betätigungsvorrichtungen für Schaltgetriebe weisen in der Regel einen Schalthebel auf, welcher innerhalb eines Getriebes eine Schaltwelle zum Beispiel zum Schalten bzw. Einlegen der Gänge verdrehen kann. An dem Schalthebel ist ein Kugelgelenk angeordnet, über welches der Schalthebel über Gestänge, Seile oder dergleichen kinematisch mit einem äußeren Schaltsystem, insbesondere einem Handschalthebel, verbunden ist. Zur Verbesserung des Schaltkomforts beim Betätigen des Handschalthebels des äußeren Schaltsystems ist in der Betätigungsvorrichtung eine auf die Schaltwelle beim Schwenken der Schaltwelle wirkende Zusatzmasse in Form eines Schalthebelgewichts vorgesehen. Diese Zusatzmasse erhöht das Massenträgheitsmoment der Schaltwelle, um am Handschalthebel während der Schaltvorgänge spürbare Kraftspitzen der Schaltkraft abzubauen.

Beim Fahren bzw. beim Schalten während des Fahrens können ausgehend von dem Getriebe Schwingungen, Vibrationen, Stöße und/oder Geräusche entstehen, welche auf den Schalthebel, das Schaltgewicht und damit auf das äußere Schaltsystem übertragen werden, wo sie von dem Fahrer, der Bedienperson des Handschalthebels, als unangenehm empfunden werden und dadurch der Fahrkomfort verschlechtert wird.

Zur Vermeidung der Übertragung der Schwingungen sind bisher Lösungen bekannt, bei denen im Bereich des Handschalthebels Entkopplungssysteme vorgesehen sind. Nachteilig hierbei ist jedoch, dass die übertragenen Schwingungen am Handschalthebel bereits derart stark sind, dass die Entkopplungssysteme am Handschalthebel einen sehr komplizierten Aufbau aufweisen müssen, um eine ausreichend gute Entkopplung zur Erhöhung des Fahrkomforts für den Fahrer des Kraftfahrzeuges überhaupt erzielen zu können.

Die DE 199 05 305 A1 offenbart eine Wähl-/Schaltkoppelstange für ein Kfz-Getriebe mit einer endseitigen Kugelpfanne, die innenseitig mit einem vibrationsdämpfenden Material ausgekleidet ist.

Es ist daher die Aufgabe der Erfindung, eine Betätigungsvorrichtung für ein Schaltgetriebe eines Kraftfahrzeuges zu schaffen, bei der bereits im Bereich des Getriebes entstehende Schwingungen, Vibrationen, Stöße und/oder Geräusche eliminiert werden können, bevor diese auf das äußere Schaltsystem übertragen werden können.

Die Aufgabe wird erfindungsgemäß durch eine Betätigungsvorrichtung mit den Merkmalen des Anspruchs 1 gelöst. Vorteilhafte Ausgestaltungen der Erfindung sind in den Unteransprüchen angegeben.

Die erfindungsgemäße Betätigungsvorrichtung für ein Schaltgetriebe eines Kraftfahrzeuges weist einen Schalthebel eines Kraftfahrzeuges, ein an dem Schalthebel angeordnetes Kugelgelenk zur Verbindung des Schalthebels mit einem äußeren Schaltsystem sowie ein Schalthebelgewicht auf, wobei an dem Kugelgelenk ein erstes Dämpfungselement insbesondere zur Dämpfung der vom Kraftfahrzeuggetriebe ausgehenden Schwingungen angeordnet ist und/oder zwischen dem Schalthebel und dem Schalthebelgewicht ein zweites Dämpfungselement insbesondere zur Reduzierung der während eines Synchronisiervorganges entstehenden Stöße angeordnet ist.

Mittels der erfindungsgemäßen Dämpfungselemente ist es möglich, vom Getriebe ausgehende Schwingungen, Vibrationen, Stöße und/oder Geräusche zu reduzieren bzw. Zu eliminieren, bevor sie zum äußeren Schaltsystem und damit zu dem Handschalthebel übertragen werden können. Durch die Eliminierung der Schwingungen, Vibrationen, Stöße und/oder Geräusche bereits dort, wo sie entstehen, nämlich am Getriebe, kann einfach und kostengünstig sowohl der Fahrkomfort als auch der Bedienkomfort des Handschalthebels für den Fahrer wesentlich erhöht werden.

Das erste Dämpfungselement ist unmittelbar am Kugelgelenk, vorzugsweise auf der dem Kugelkopf des Kugelgelenk entgegensetzten Seite, angeordnet. An dem Kugelkopf des Kugelgelenks sind Übertragungsmittel, wie Gestänge, Seile, Kabel oder dergleichen, befestigt, welche die kinematische Verbindung des Schalthebels mit dem äußeren Schaltsystem herstellen. Dadurch, dass bereits am Kugelgelenk ein Dämpfungselement vorgesehen ist, wird bereits eine Übertragung von Schwingungen von dem Getriebe an die Übertragungsmittel verhindert, so dass eine Entkopplung beispielsweise an der Befestigung der Übertragungsmittel nicht mehr notwendig ist. Auf Grund dessen, dass nunmehr keine störenden Schwingungen mehr an die Übertragungsmittel übertragen werden, weisen diese eine optimierte Reibung und einen verbesserten Wirkungsgrad auf, ohne dass spezielle Übertragungsmittel eingesetzt werden müssen. Somit können Standardübertragungsmittel, wie Standardkabel, verwendet werden, was zu erheblichen Kosteneinsparungen führt.

Das Kugelgelenk ist dabei zumindest teilweise von dem ersten Dämpfungselement derart umgeben, dass das Kugelgelenk drehbar in dem Dämpfungselement gelagert ist. Insbesondere während des Synchronisiervorganges, bei dem ein Gangwechsel erfolgt, liegt das Dämpfungselement direkt an dem Kugelgelenk an, so dass das Dämpfungselement beim Wechseln des Ganges entstehende Schwingungen, Geräusche und Vibrationen durch ein Entkoppeln eliminiert, und somit verhindert, dass diese über den Kugelkopf des Kugelgelenks an die Übertragungsmittel weitergegeben werden können. Ist der gewünschte Gang eingeschaltet, entspannt sich das System und das Kugelgelenk lässt sich mit geringen Kräften vorzugsweise in einem Bewegungsradius von +/- 0, 3 mm bewegen. Das erste Dämpfungselement ist vorzugsweise um drei Achsen frei beweglich.

Ferner kann das Schalthebelgewicht erfindungsgemäß durch ein zweites Dämpfungselement mit dem Schalthebel verbunden sein, wodurch eine starre Verbindung des Schalthebelgewichts mit dem Schalthebel vermieden werden kann und daher eine Entkopplung der Masse ermöglicht wird. Mit Hilfe des zweiten Dämpfungselementes ist es möglich, dass insbesondere während eines Synchronisiervorganges bzw. während eines Gangwechsels das Schalthebelgewicht nachschwingen kann, um dadurch vorteilhafterweise beim Synchronisiervorgang entstehende Stöße abmildern zu können. Ist zusätzlich zu dem zweiten Dämpfungselement das erste Dämpfungselement am Kugelgelenk vorgesehen, so können die beim zweiten Dämpfungselement durch das Abfangen der Stöße entstehende Schwingungen durch das erste Dämpfungselement direkt eliminiert werden, so dass diese nicht an das äußere Schaltsystem übertragen werden. Insbesondere Milderung des Impacts, Reduzierung eines so genannten "Aufschaltkratzens", welches durch zu schnelles Schalten in einen nächsten Gang entstehen kann, als auch die Reduzierung von Vibrationen können mittels des zweiten Dämpfungselementes erzielt werden, wodurch der Fahrkomfort für den Fahrer erheblich erhöht wird.

Erfindungsgemäß können bei der Betätigungsvorrichtung lediglich eines der beiden Dämpfungselemente als auch beide Dämpfungselemente gleichzeitig vorgesehen sein.

Mittels der erfindungsgemäßen Dämpfungselemente ist es somit möglich, Schwingungen, welche sich negativ auf das Fahrgefühl des Fahrers auswirken, im Bereich des Getriebes und damit bereits dort zu eliminieren, wo sie entstehen. Die erfindungsgemäße Lösung zeichnet sich dabei insbesondere durch eine einfache und kostengünstige Bauweise aus.

Vorzugsweise sind das erste Dämpfungselement und/oder das zweite Dämpfungselement aus einem elastischen Material hergestellt. Das elastische Material hat dabei vorzugsweise die Wirkung wie eine Feder. Das elastische Material besteht vorzugsweise aus einem Elastomer, welches sich bei Zug- und Druckbelastung verformen kann und nach der Belastung seine ursprüngliche, unverformte Gestalt wieder annimmt. Dabei können beispielsweise thermoplastische Elastomere, wie PP/EPDM, verwendet werden. Das für die Dämpfungselemente zu verwendende elastische Material zeichnet sich zudem durch eine hohe Temperaturbeständigkeit, Ölbeständigkeit und Kraftstoffbeständigkeit aus.

Nach einer bevorzugten Ausgestaltung ist das erste Dämpfungselement zylinderförmig ausgestaltet. Das erste Dämpfungselement kann dabei aus einem zylinderförmigen Block oder auch aus mehreren verschieden oder gleichgroßen Scheiben bestehen, welche übereinander gelegt eine zylinderförmige Struktur ergeben. Das erfindungsgemäße zylinderförmige Dämpfungselement zeichnet sich durch eine besonders gute Federkennlinie, welche den Zusammenhang zwischen Verformung und Kraft beschreibt, aus, wobei bei der Zylinderform Schwingungen besonders gut eliminiert werden können. Das erste Dämpfungselement kann aber auch andere Formen, wie beispielsweise eine Tonnenform oder eine Kegelform, aufweisen. Durch unterschiedliche Formen des ersten Dämpfungselementes wird jedoch auch die jeweilige Federkennlinie verändert.

Ferner ist vorzugsweise das erste Dämpfungselement zumindest teilweise von einem Gehäuse umgeben, wobei zwischen der Innenwand des Gehäuses und dem ersten Dichtungselement ein Spalt ausgebildet ist. Das Gehäuse weist vorzugsweise die Form einer Hülse auf, wodurch zum einen verhindert wird, dass Schmutz in den Bereich des Dämpfungselementes gelangen kann. Zwischen der Innenwand des Gehäuses und dem ersten Dämpfungselement ist ferner ein Spalt, vorzugsweise in Form eines Spieles ausgebildet, so dass sich das Dämpfungselement in einem bestimmten Umfang frei bewegen kann, um so optimal die von dem Getriebe ausgehenden Schwingungen auffangen und eliminieren zu können. Die Stärke der Schwingungsamplituden in axialer als auch in radialer Richtung können dabei durch die Innenwand des Gehäuses begrenzt werden, so dass es nicht zu einer Überschwingung des Dämpfungselementes kommen kann.

Gemäß einer weiteren Ausführungsform ist zwischen einer ersten Stirnseite des ersten Dämpfungselementes und dem Gehäuse ein erstes Dichtungselement angeordnet und/oder zwischen einer zweiten Stirnseite des ersten Dämpfungselementes und dem Kugelgelenk ein zweites Dichtungselement angeordnet. Die Dichtungselemente können beispielsweise als Gummidichtungen ausgebildet sein. Durch die Dichtungselemente wird eine zusätzliche Abfederung bzw. Dämpfung erzielt. Zudem werden mittels der Dichtungselemente die Schwingungsamplituden des ersten Dämpfungselementes in axialer Richtung begrenzt.

Nach einer bevorzugten Ausführungsform ist das Kugelgelenk mit dem Schalthebel über ein Anschlagselement verbunden, wobei zwischen dem Kugelgelenk und dem Anschlagselement ein Dichtungselement, beispielsweise in Form einer O-Ring Dichtung, vorgesehen ist. Das Anschlagselement ist vorzugsweise in Form einer Metallplatte ausgebildet, welche fest an dem Schalthebel fixiert sein kann. Die Verbindung zwischen dem Schalthebel und dem Anschlagselement erfolgt über ein Dichtungselement, vorzugsweise eine O-Ring Dichtung. Das Dichtungselement dient als zusätzliche Abfederung bzw. Dämpfung gegenüber Schwingungen, wobei mittels des Anschlagselementes eine Auslenkung des Kugelgelenks in radialer Richtung begrenzt werden kann.

Das zweite Dämpfungselement, welches insbesondere zur Reduzierung der während eines Synchronisiervorganges entstehenden Vibrationen angeordnet ist, ist vorzugsweise durch Vulkanisieren mit dem Schalthebelgewicht und dem Schalthebel verbunden. Dabei besteht das zweite Dämpfungselement bevorzugt aus einem Elastomer, welches fest an dem Schalthebelgewicht und dem Schalthebel anvulkanisiert sein kann. Das vulkanisierte Dämpfungselement zeichnet sich durch dauerelastische Eigenschaften aus, bei denen das Material bei mechanischer Beanspruchung wieder in seine Ursprungslage zurückkehrt. Zudem weist es eine hohe Reißfestigkeit, Dehnung und Beständigkeit gegenüber Alterungserscheinungen auf. Durch das Anvulkanisieren werden keine zusätzlichen Befestigungselemente benötigt, welche unter anderem die Dämpfungseigenschaften negativ beeinflussen könnten. Zudem ist das Dämpfungselement leicht und schnell befestigbar. Das Dämpfungselement hat dabei vorzugsweise die Form eines Zylinders; es kann jedoch auch andere Formen aufweisen.

Quer zur Längsachse des Schalthebels ist ein Verlängerungselement vorgesehen, welches eine schlitzförmige Öffnung aufweist, wobei ein an dem Schalthebelgewicht angeordnetes Verbindungselement durch die schlitzförmige Öffnung des Verlängerungselementes geführt ist. Das Verbindungselement ist vorzugsweise eine ebene Platte, beispielsweise Blechplatten, welche fest an dem Schalthebelgewicht fixiert ist. Mit Hilfe des Verbindungselementes wird zusätzlich zu dem zweiten Dämpfungselement eine Verbindung zwischen dem Schalthebelgewicht und dem Schalthebel geschaffen. Die schlitzförmige Öffnung ist dabei größer ausgebildet als die Umfangsfläche des Verbindungselementes, so dass zwischen der Innenwand der Öffnung und der Außenfläche des Verbindungselementes ein Spalt gebildet ist. Das Verbindungselement in Kombination mit der schlitzförmigen Öffnung dient als zusätzliche Anschlags-, bzw. Schwingungsbegrenzung. Zudem dient das Verbindungselement als Verlustsicherung, falls das zweite Dämpfungselement reißen sollte, so dass das Schalthebelgewicht auch in diesem Fall weiter mit dem Schalthebel verbunden ist.

Ferner ist das Verbindungselement bevorzugt entlang seiner Längsachse parallel zur Längsachse des zweiten Dämpfungselementes angeordnet. Durch diese Anordnung des Verbindungselementes zu dem zweiten Dämpfungselement wird eine besonders gute Schwingungsbegrenzung und Verlustsicherung erreicht.

Nachfolgend wird die Erfindung unter Bezugnahme auf die anliegenden Zeichnungen anhand bevorzugter Ausführungsformen näher erläutert. Es zeigen:
- Fig. 1: eine schematische Schnittansicht einer erfindungsgemäßen Betätigungsvorrichtung mit einem ersten Dämpfungselement in einer ersten Ausführungsform,
- Fig. 2: eine schematische Seitenansicht des Aufbaus eines erfindungsgemäßen Kugelgelenks gemäß einer zweiten Ausführungsform in einer ersten Zusammenbaustufe,
- Fig. 3: eine weitere schematische Seitenansicht des Aufbaus eines erfindungsgemäßen Kugelgelenks gemäß der zweiten Ausführungsform in einer zweiten Zusammenbaustufe,
- Fig. 4: eine weitere schematische Seitenansicht des erfindungsgemäßen Kugelgelenks gemäß der zweiten Ausführungsform in einer dritten Zusammenbaustufe,
- Fig. 5: eine schematische Seitenansicht einer Anordnung eines Kugelgelenks gemäß der zweiten Ausführungsform in einem Schalthebel und
- Fig. 6: eine schematische Seitenansicht einer Betätigungsvorrichtung mit einem zweiten Dämpfungselement gemäß einer weiteren Ausführungsform.

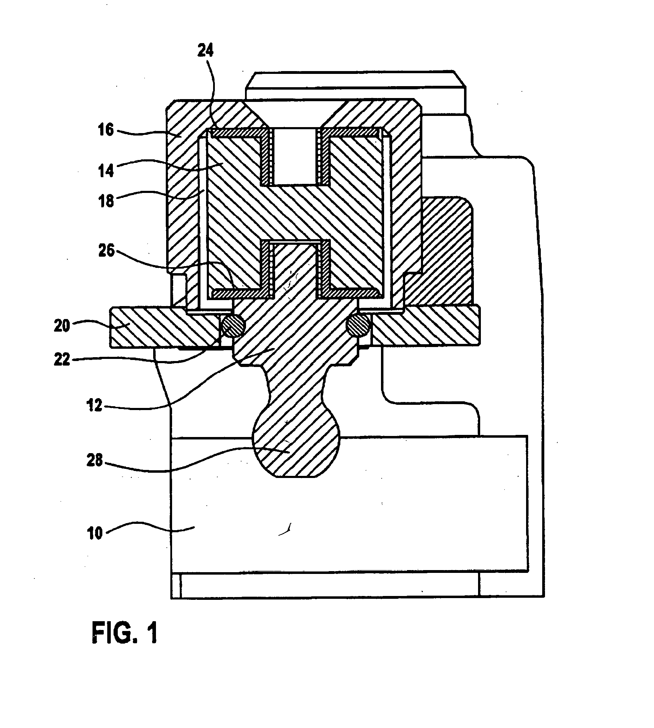

In Fig. 1 ist eine erfindungsgemäße Betätigungsvorrichtung für ein Schaltgetriebe eines Kraftfahrzeuges mit einem Schalthebel 10 eines Kraftfahrzeuggetriebes sowie einem Kugelgelenk 12 gezeigt. Das Kugelgelenk 12 ist an dem Schalthebel 10 angeordnet und dient zur Verbindung des Schalthebels 10 mit einem, hier nicht dargestellten, äußeren Schaltsystem, insbesondere einem Handschalthebel. An dem Kugelgelenk 12 ist ein erstes Dämpfungselement 14 angeordnet, welches insbesondere zur Dämpfung der vom Kraftfahrzeuggetriebe ausgehenden Schwingungen dient. Das Dämpfungselement 14 ist aus einem zylinderförmigen Elastomer-Block gebildet, welcher besonders gut Schwingungen dämpfen kann. Um das Dämpfungselement 14 ist ein Gehäuse 16 angeordnet, wobei zwischen dem Dämpfungselement 14 und der Innenwand des Gehäuses 16 ein Spalt 18 ausgebildet ist. Das Gehäuse 16 wird an einer Seite von einem Anschlagselement 20 begrenzt, welches das Kugelgelenk 12 über beispielsweise eine O-Ring Dichtung 22 mit dem Schalthebel 10 verbindet. Zwischen der ersten Stirnseite des Dämpfungselementes 14 und dem Gehäuse 16 ist zudem ein erstes Dichtungselement 24 und zwischen der zweiten Stirnseite des Dämpfungselementes 14 und dem Kugelgelenk 12 ist ein zweites Dichtungselement 26 angeordnet.

Mit Hilfe des ersten Dämpfungselementes 14 ist es möglich, in dem Getriebe entstandene Schwingungen zu vermindern bzw. zu eliminieren, bevor sie über den Kugelkopf 28 des Kugelgelenks 12 an, hier nicht dargestellte, Übertragungsmittel, welche den Schalthebel 10 des Getriebes mit dem Handschalthebel des äußeren Schaltsystem verbinden, übertragen werden können.

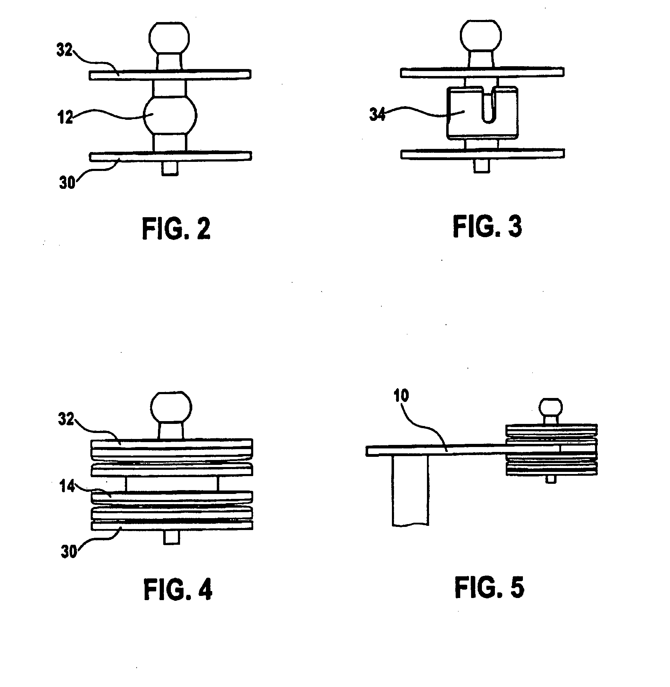

In den Fig. 2 bis 5 ist schematisch ein möglicher Zusammenbau eines ersten Dämpfungselementes 14 gemäß einer zweiten Ausführungsform mit einem Kugelgelenk 12 dargestellt. Hierbei ist das Dämpfungselement 14 aus mehreren aufeinander geschichteten unterschiedlich großen Elastomer-Scheiben aufgebaut. In Fig. 2 ist ein Kugelgelenk 12 gezeigt, an welchem in einem bestimmten Abstand zueinander eine erste Abdeckplatte 30 und eine zweite Abdeckplatte 32 angebracht sind. Wie in Fig. 3 dargestellt, wird um eine Gelenkkugel des Kugelgelenks 12 eine Abdeckung 34, beispielsweise in Form eines Kunststoffclips, aufgesteckt. Das Kugelgelenk 12 ist dabei drehbar in der Abdeckung 34 gelagert. Anschließend werden, wie in Fig. 4 gezeigt, mehrere Elastomer-Scheiben um die Abdeckung 34 zwischen der ersten Abdeckplatte 30 und der zweiten Abdeckplatte 32 aufgebracht. Im mittleren Bereich des Dämpfungselementes 14 können die Elastomer-Scheiben eine geringere Außenumfangsfläche aufweisen als die Elastomer-Scheiben im äußeren Bereich, so dass das Dämpfungselement 14 in seinem mittleren Bereich mit dem Schalthebel 10 befestigt werden kann (Fig. 5). Die Form der Elastomer-Scheiben ist dabei so gewählt, dass der Kraftanstieg exponential ist. Liegen die Schaltkräfte während des Synchronisiervorganges an, werden die Elastomer-Scheiben aufeinander gedrückt. Ist der Gang eingeschaltet entspannt sich das System wieder, zwischen den einzelnen Elastomer-Scheiben können geringe Spalte ausgebildet sein und das Kugelgelenk lässt sich mit sehr geringen Kräften beispielsweise in einem Bewegungsradius von +/- 0,3 mm bewegen.

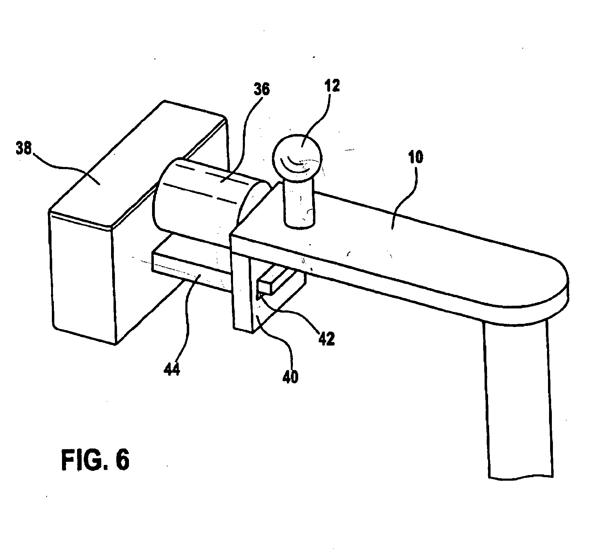

In Fig. 6 ist schematisch ein Schalthebel 10 dargestellt, welcher über ein zweites Dämpfungselement 36 mit einem Schalthebelgewicht 38 verbunden ist. Das zweite Dämpfungselement 36, welches insbesondere zur Reduzierung der während eines Synchronisiervorganges entstehenden Stöße angeordnet ist, ist vorzugsweise durch Vulkanisieren mit dem Schalthebelgewicht 38 und dem Schalthebel 10 verbunden. Dabei kann das zweite Dämpfungselement 36 aus einem zylinderförmigen Elastomer-Block bestehen, welcher fest an dem Schalthebelgewicht 38 und dem Schalthebel 10 anvulkanisiert ist. Mit Hilfe des zweiten Dämpfungselementes 36 ist es möglich, dass insbesondere während eines Synchronisiervorganges bei einem Schaltvorgang das Schalthebelgewicht 38 nachschwingen kann, um dadurch vorteilhafterweise beim Synchronisiervorgang entstehende Stöße abmildern zu können. Wie in Fig. 6 ferner gezeigt, ist an dem Schalthebel 10 ein Kugelgelenk 12 angeordnet, an welchem das erste Dämpfungselement 14 angeordnet sein kann.

Quer zur Längsachse des Schalthebels 10 kann ferner ein Verlängerungselement 40 angeordnet sein, welches eine schlitzförmige Öffnung 42 aufweist. Durch diese schlitzförmige Öffnung 42 wird ein an dem Schalthebelgewicht 38 fest angeordnetes Verbindungselement 44 geführt. Das Verbindungselement 44 ist bevorzugt entlang seiner Längsachse parallel zur Längsachse des zweiten Dämpfungselementes 36 angeordnet. Das Verbindungselement 44 in Kombination mit der schlitzförmigen Öffnung 42 dient als zusätzliche Anschlags-, bzw. Schwingungsbegrenzung. Zudem dient es als Verlustsicherung, falls das zweite Dämpfungselement 36 reißen sollte, so dass das Schalthebelgewicht 38 auch in diesem Fall weiter mit dem Schalthebel 10 verbunden ist.

### Bezugszeichenliste

- 10: Schalthebel
- 12: Kugelgelenk
- 14: erstes Dämpfungselement
- 16: Gehäuse
- 18: Spalt
- 20: Anschlagselement
- 22: Dichtungselement
- 24: erstes Dichtungselement
- 26: zweites Dichtungselement
- 28: Kugelkopf
- 30: erste Abdeckplatte
- 32: zweite Abdeckplatte
- 34: Abdeckung
- 36: zweites Dämpfungselement
- 38: Schalthebelgewicht
- 40: Verlängerungselement
- 42: schlitzförmige Öffnung
- 44: Verbindungselement

## Patentansprüche

1. Betätigungsvorrichtung für ein Schaltgetriebe eines Kraftfahrzeuges, umfassend
einen Schalthebel (10) eines Kraftfahrzeuggetriebes,
ein an dem Schalthebel (10) angeordnetes Kugelgelenk (12) zur Verbindung des Schalthebels (10) mit einem äußeren Schaltsystem, und
ein Schalthebelgewicht (38)
**dadurch gekennzeichnet, dass**
quer zur Längsachse des Schalthebels (10) ein Verlängerungselement (40) vorgesehen ist, welches eine schlitzförmige Öffnung (42) aufweist, wobei ein an dem Schalthebelgewicht (38) angeordnetes Verbindungselement (44) durch die schlitzförmige Öffnung (42) des Verlängerungselementes (40) geführt ist;
und dadurch, dass
an dem Kugelgelenk (12) ein erstes Dämpfungselement (14) insbesondere zur Dämpfung der vom Kraftfahrzeuggetriebe ausgehenden Schwingungen angeordnet ist
und/oder
zwischen dem Schalthebel (10) und dem Schalthebelgewicht (38) ein zweites Dämpfungselement (36) insbesondere zur Reduzierung der während eines Synchronisiervorganges entstehenden Stöße angeordnet ist.

2. Betätigungsvorrichtung nach Anspruch 1, **dadurch gekennzeichnet, dass** das erste Dämpfungselement (14) und/oder das zweite Dämpfungselement (36) aus einem elastischen Material hergestellt sind.

3. Betätigungsvorrichtung nach einem der Ansprüche 1 oder 2, **dadurch gekennzeichnet, dass** das erste Dämpfungselement (14) zylinderförmig ausgestaltet ist.

4. Betätigungsvorrichtung nach einem der Ansprüche 1 bis 3, **dadurch gekennzeichnet, dass** das erste Dämpfungselement (14) zumindest teilweise von einem Gehäuse (16) umgeben ist, wobei zwischen der Innenwand des Gehäuses (16) und dem ersten Dämpfungselement (14) ein Spalt (18) ausgebildet ist.

5. Betätigungsvorrichtung nach einem der Ansprüche 1 bis 4, **dadurch gekennzeichnet, dass** zwischen einer ersten Stirnseite des ersten Dämpfungselementes (14) und dem Gehäuse (16) ein erstes Dichtungselement (24) angeordnet ist und/oder zwischen einer zweiten Stirnseite des ersten Dämpfungselementes (14) und dem Kugelgelenk (12) ein zweites Dichtungselement (26) angeordnet ist.

6. Betätigungsvorrichtung nach einem der Ansprüche 1 bis 5, **dadurch gekennzeichnet, dass** das Kugelgelenk (12) mit dem Schalthebel (10) über ein Anschlagselement (20) verbunden ist, wobei zwischen dem Kugelgelenk (12) und dem Anschlagselement (20) ein Dichtungselement (22), beispielsweise in Form einer O-Ring Dichtung, angeordnet ist.

7. Betätigungsvorrichtung nach einem der Ansprüche 1 bis 6, **dadurch gekennzeichnet, dass** das zweite Dämpfungselement (36) durch Vulkanisieren mit dem Schalthebelgewicht (38) und dem Schalthebel (10) verbunden ist.

8. Betätigungsvorrichtung nach einem der Ansprüche 1 bis 7, **dadurch gekennzeichnet, dass** das Verbindungselement (44) entlang seiner Längsachse parallel zur Längsachse des zweiten Dämpfungselementes (36) angeordnet ist.

## Claims

1. An actuating apparatus for a manual transmission of a motor vehicle, comprising
a gearshift lever (10) of an automotive transmission,
a ball joint (12) arranged on the gearshift lever (10) for connecting the gearshift lever (10) to an external shifting system, and
a gearshift lever weight (38),
**characterized in that**
an extension element (40) is provided transversely to the longitudinal axis of the gearshift lever (10), which extension element (40) comprises a slit-shaped opening (42), wherein a connecting element (44) arranged on the gearshift lever weight (38) is guided through the slit-shaped opening (42) of the extension element (40),
and **in that**
a first damping element (14) is arranged on the ball joint (12) especially for damping the vibrations originating from the automatic transmission,
and/or
a second damping element (36) is arranged between the gearshift lever (10) and the gearshift lever weight (38) especially for reducing the jolts produced during a synchronization process.

2. An actuating apparatus according to claim 1, **characterized in that** the first damping element (14) and/or the second damping element (36) are made of an elastic material.

3. An actuating apparatus according to one of the claims 1 or 2, **characterized in that** the first damping element (14) is arranged in a cylindrical manner.

4. An actuating apparatus according to one of the claims 1 to 3, **characterized in that** the first damping element (14) is surrounded at least partly by a housing (16), wherein a gap (18) is formed between the inner wall of the housing (16) and the first damping element (14).

5. An actuating apparatus according to one of the claims 1 to 4, **characterized in that** a first sealing element (24) is arranged between a first face end of the first damping element (14) and the housing (16), and/or a second sealing element (26) between a second face end of the first damping element (14) and the ball joint (12).

6. An actuating apparatus according to one of the claims 1 to 5, **characterized in that** the ball joint (12) is connected to the gearshift lever (10) via a stop element (20), wherein a sealing element (22), e.g. in form of an O-ring, is arranged between the ball joint (12) and the stop element (20).

7. An actuating apparatus according to one of the claims 1 to 6, **characterized in that** the second damping element (36) is connected by vulcanization to the gearshift lever weight (38) and the gearshift lever (10).

8. An actuating apparatus according to one of the claims 1 to 7, **characterized in that** the connecting element (44) is arranged along its longitudinal axis parallel to the longitudinal axis of the second damping element (36).

## Revendications

1. Dispositif d'actionnement pour une boîte de vitesses de véhicule à moteur, comprenant
un levier de vitesses (10) d'une boîte de vitesses de véhicule à moteur,
une articulation à rotule (12) disposée sur le levier de vitesses (10) pour relier le levier de vitesses (10) à un système de changement de rapports externe, et
un poids de levier de vitesse (38),
**caractérisé en ce qu'**un élément de rallonge (40) présentant une ouverture (42) en forme de fente est prévu transversalement par rapport à l'axe longitudinal du levier de vitesses (10), un élément de liaison (44) disposé sur le poids de levier de vitesse (38) étant passé à travers l'ouverture en forme de fente (42) de l'élément de rallonge (40),
et **en ce qu'**il est prévu sur l'articulation à rotule (12) un premier élément d'amortissement (14), en particulier pour amortir les vibrations provenant de la boîte de vitesses de véhicule à moteur
et/ou
il est prévu entre le levier de vitesses (10) et le poids de levier de vitesse (38) un deuxième élément d'amortissement (36) servant en particulier à réduire les chocs produits pendant une opération de synchronisation.

2. Dispositif d'actionnement selon la revendication 1, **caractérisé en ce que** le premier élément d'amortissement (14) et/ou le deuxième élément d'amortissement (36) sont faits d'un matériau élastique.

3. Dispositif d'actionnement selon l'une des revendications 1 ou 2, **caractérisé en ce que** le premier élément d'amortissement (14) est en forme de cylindre.

4. Dispositif d'actionnement selon l'une des revendications 1 à 3, **caractérisé en ce que** le premier élément d'amortissement (14) est au moins partiellement entouré par un boîtier (16), un interstice (18) étant formé entre la paroi intérieure du boîtier (16) et le premier élément d'amortissement (14).

5. Dispositif d'actionnement selon l'une des revendications 1 à 4, **caractérisé en ce qu'**il est prévu entre une première face d'extrémité du premier élément d'amortissement (14) et le boîtier (16) un premier élément d'étanchéité (24) et/ou il est prévu entre une deuxième face d'extrémité du premier élément d'amortissement (14) et l'articulation à rotule (12) un deuxième élément d'étanchéité (26).

6. Dispositif d'actionnement selon l'une des revendications 1 à 5, **caractérisé en ce que** l'articulation à rotule (12) est reliée au levier de vitesses (10) par un élément de butée (20), un élément d'étanchéité (22), par exemple un joint torique, étant disposé entre l'articulation à rotule (12) et l'élément de butée (20).

7. Dispositif d'actionnement selon l'une des revendications 1 à 6, **caractérisé en ce que** le deuxième élément d'amortissement (36) est relié au poids de levier de vitesse (38) et au levier de vitesses (10) par vulcanisation.

8. Dispositif d'actionnement selon l'une des revendications 1 à 7, **caractérisé en ce que** l'élément de liaison (44) est disposé le long de son axe longitudinal parallèlement à l'axe longitudinal du deuxième élément d'amortissement (36).
